# EUROPEAN PATENT APPLICATION

(11) **EP 4 319 462 A1**
(43) Date of publication of application: **07.02.2024**
(21) Application number: 22306184.7
(22) Date of filing: 04.08.2022
(51) Int. Cl.: H04W 76/23, H04W 36/00, H04W 8/00, H04W 88/04, H04L 67/1061, H04L 67/51

(54) **OPTIMIZING RELAY RESELECTION OF SIDELINK COMMUNICATION BETWEEN A SOURCE USER EQUIPMENT AND A TARGET USER EQUIPMENT**

(71) Applicant: Mitsubishi Electric R&D Centre Europe BV, 1119 NS Schiphol Rijk Amsterdam (NL); MITSUBISHI ELECTRIC CORPORATION, Chiyoda-ku Tokyo 100-8310 (JP)
(72) Inventor: LI, Qianrui, 35708 RENNES CÉDEX 7 (FR); BONNEVILLE, Hervé, 35708 RENNES CEDEX 7 (FR)
(74) Representative: Plasseraud IP

(57) **Abstract**

The invention relates to method for optimizing relay reselection of sidelink communication between a source user equipment and a target user equipment, the method comprising:
- sending a solicitation message for a relay reselection by a first U2U relay to at least one U2U relay in the vicinity, wherein the sidelink communication is initially established via the first U2U relay; and
- sending a response message to respond to the solicitation message, by at least one candidate U2U relay among the at least one U2U relay in the vicinity, for relay reselection.

The invention improves efficiency for the relay reselection.

## Description

### FIELD OF INVENTION

The present invention relates to relay of sidelink communication between two user equipments, i.e. source and target user equipments, especially to a method for optimizing relay reselection of such a sidelink communication.

### BACKGROUND

User-to-User (U2U) relay for 5G New Radio (NR) Proximity Service (ProSe) is an important technology under 3GPP.

U2U relay is a kind of User Equipment (UE) node that can be used as a relay. When a source UE wants to communicate to a target UE but cannot reach the target UE directly, the source UE can use the U2U relay to pass the information and reach the target UE. Different from a conventional Base Station (BS) to UE communication via the Uu interface, the communications discussed in the present invention are device-to-device (D2D) sidelink communication via the PC5 interface.

A conventional sidelink communication from source to target UE via a U2U relay will potentially involve several steps as follows:
First, a relay discovery procedure is needed for the source/target UE to discover the UE nodes in their neighborhood. If a direct sidelink communication is possible between the source and target UE, a U2U relay is not needed. However, if the source UE is not able to communicate to the target UE directly, the source UE will need to find out UEs (by means of knowing the layer 2 IDs of the nodes) in its vicinity that can serve as U2U relays to reach the target UE.
Second, a relay/path/route selection procedure is used to select the most suitable U2U relay for the communication between the source and target UE.

Finally, once the optimal relay/path/route is selected, each pair of UE nodes need to establish a layer 2 communication link, and the sidelink communication is borne on this link.

In case of a sidelink failure event due to UE mobility or sudden change of radio propagation condition (such as deep fading or blockage), established sidelinks can be disrupted, and a U2U relay reselection procedure is needed for source UE to find a new U2U relay and re-establish a sidelink communication to target UE via the new U2U relay node.

Different propositions on the U2U relay discovery, selection, and reselection methods are currently proposed, such as the ones under discussion in the 3GPP SA2 group under the study item ProSe in 5G system phase 2 for release 18.

As discussed above, for a sidelink communication between a source and a destination UE via a U2U relay, three steps are generally involved during the whole procedure: the relay discovery, the relay selection, and the signaling for the sidelink establishment followed by the communication on the established link.

In particular, there are three state-of-the-art approaches for relay discovery proposed in 3GPP, which will be discussed below.

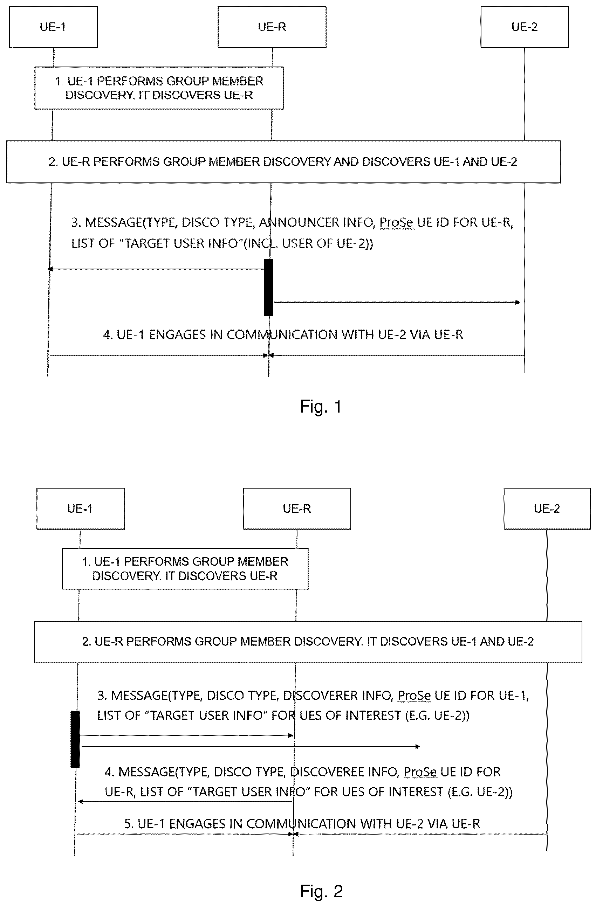

The first one is called relay discovery model A. In this model, each U2U relay will send proactively a periodical announcement information to UEs in its vicinity to indicate that it can serve as a U2U relay to reach a target UE. The procedure of relay discovery model A is shown in the Fig. 1 below.

As shown in Fig.1, in step 1 and step 2 of relay discovery model A, the source UE (UE-1 in the figure) and U2U relay (UE-R in the figure) use a pre-requisite procedure called group member discovery which is specified in LTE ProSe communication to obtain the layer 2 ID of the corresponding nodes. In this case, when the U2U relay will send periodical announcement messages, instead of performing a broadcast that potentially interferes many UEs, this message will be sent in a groupcast manner. The U2U relay discovery starts at step 3, with U2U relay sending periodically the announcement message in the following format:
- Type = Announcement
- Disco Type = UE-to-UE Relay Discovery
- Announcer Info (i.e. an upper layer identifier for the UE-R user)
- ProSe UE ID of UE-R (i.e. Layer-2 identifier of UE-R)
- A list of "Target User Info" parameters

Wherein "Target User Info" is an upper layer parameter identifying the target user. To support Layer-2 communication via the stateful U2E Relay, the "Target User Info" also includes the Layer-2 identifier of the target user's UE. It can also include parameters that have been gathered during Group Member Discovery in step 2.

Afterwards, in step 4 of Fig. 1, the source UE (UE-1) engages in communication with the target UE (UE-2 in the figure) via the U2U relay (UE-R).

Some variations of relay discovery model A have also been proposed in 3GPP. For example, instead of using the group member discovery procedure in steps 1 and 2, another procedure called direct discovery procedure, which is also specified in LTE ProSe communication, can be used to obtain the layer 2 ID. If there exists previous direct communication between UEs, the previously identified layer 2 ID can also be used. Additionally, in the announcement message format, a relay service code (RCS) is included.

Another variation of relay discovery model A exists where there is no pre-requisite procedure such as group member discovery or direct discovery to let U2U relay obtain recipient UEs' layer 2 ID for the announcement message. In this case, the periodical announcement message is sent in a broadcast manner. In addition, a relay service code (RCS) is also included in the announcement message format.

The second relay discovery model proposed in 3GPP is relay discovery model B. In this model, instead of using a periodical announcement message, a reactive on-demand solicitation message and a response message are used for the relay discovery. The procedure of relay discovery model B is shown in the Fig. 2.

Same as model A, in step 1 and step 2 of the relay discovery mode B, the source UE and U2U relay use a pre-requisite group member discovery procedure to obtain the layer 2 ID of the corresponding nodes. After step 1, UE-1 realizes the target user is not within direct range over NR PC5. UE-1 then, in step 3, solicits potential U2U Relays by transmitting the Solicitation message including the following parameters:
- Type = Solicitation
- Disco Type = UE-to-UE Relay Discovery
- Discoverer Info (i.e. an upper layer identifier for the UE-1 user)
- ProSe UE ID of UE-1 (i.e. layer-2 identifier of UE-1)
- A list of "Target User Info" parameters

Upon reception of the solicitation message, in step 4 of Fig. 2, UE-R realizes that it can act as a U2U Relay and replies with a Response message including the following parameters:
- Type = Response
- Disco Type = UE-to-UE Relay Discovery
- Discoverer Info (i.e. an upper layer identifier for the UE-R user)
- ProSe UE ID of UE-R (i.e. layer-2 identifier of UE-R)
- A list of "Target User Info" parameters

Afterwards, in step 5 of Fig. 2, the source UE (UE-1) engages in communication with the target UE (UE-2) via the U2U relay (UE-R).

Some variations of relay discovery model B have also been proposed in 3GPP. For example, instead of letting UE1 perform a group member discovery in step 1 to obtain the Layer 2 ID of potential U2U relay, the solicitation message is a broadcast message. Also similar as the variations in model A, instead of letting the U2U relay performing a group member discovery in step 2, a direct discovery procedure or previously direct communication information can be used to identify the Layer 2 ID. In addition, a relay service code (RCS) is also included in the announcement message format.

Some other variations of relay discovery model exist considering no pre-requisite group member discovery or direct discovery procedure or previously direct communication to obtain the layer 2 ID. In this case, the solicitation message is a broadcast message, and when a potential U2U relay receives a solicitation message, according to its capability as a U2U relay, it will forward the solicitation message by broadcasting this solicitation message in its neighborhood. This procedure is similar to the conventional ad-hoc on-demand distance vector (AODV) algorithm in a mobile ad-hoc network (MANET). The target UE may receive several forwarding solicitation messages from different U2U relays, it can either select one U2U relay to send a response message, and this message is forwarded back to the source UE by the selected U2U relay, or it can also send a response message to each U2U relay that forwards the solicitation message. In the latter case, each U2U relay will forward the response message back to the source UE and it is the source UE who will make the final selection on the best U2U relay.

The third relay discovery model proposed in the current 3GPP discussion involves a unification of the relay discovery, relay selection, and the PC5-signaling (PC5-S) procedure to reduce the signaling overhead. Therefore, the procedure will directly start with the direct communication request from the source UE to a target UE. The direct communication request (DCR) is a message in the PC5-S protocol to initialize the layer 2 link establishment between two UE nodes. Since the source UE cannot reach the target UE directly, the U2U relays that receive the DCR message will forward and broadcast the DCR message in its neighborhood using a similar manner as the AODV described above in the variation of model B.

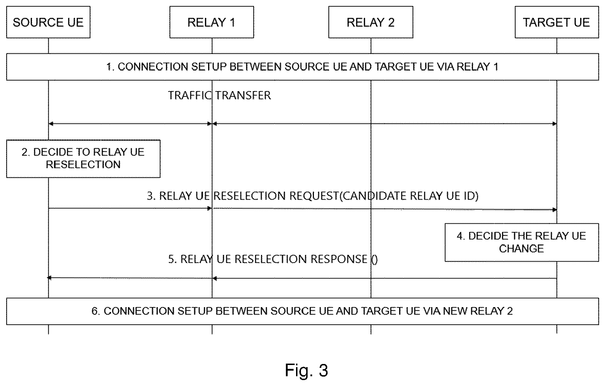

For relay reselection (for example, in the case of a relay reselection due to a sidelink failure event caused by UE mobility or a sudden change of radio propagation condition), there are two state-of-the-art propositions in 3GPP. The first and the simplest way is to restart the relay discovery procedure described above from scratch. In this way, the source UE can learn the updated information of potential U2U relays and make a re-selection. The second proposition involves a negotiation between the source and target UE via the current U2U relay. The procedure for this negotiation-based relay reselection model is shown in Fig. 3.

In this negotiation-based relay reselection model, after the connection setup between two UEs via Relay 1 in step 1 of Fig. 3, the Source UE decides to perform U2U Relay reselection, as shown in step 2 of Fig. 3. This may be triggered by receiving the relay discovery message from another U2U Relay, and the signal quality with this U2U Relay is better than that with the current U2U Relay (Relay 1). Alternatively, the Source UE will initiate the discover message to find candidate UE-to-UE Relays which can provide a better connection, when it finds that the signal quality with Relay 1 is not good enough.

After the Source UE identifies the candidate U2U Relays, the Source UE sends the U2U Relay reselection request to the Target UE using the connection via Relay 1 (step 3 of Fig. 3), and the request message includes a list of candidate U2U Relay ID(s) ordered by the Source UE's preference based on e.g. the signal quality of U2U Relays.

Afterwards, in step 4 of Fig. 3, the Target UE decides to change from Relay 1 to a new UE-to-UE Relay. The new U2U Relay is chosen from the candidate list included in the reselection request. This decision can be based on a new U2U Relay providing the best signal quality, additionally based on the order of candidate U2U Relay ID (s) received from the Source UE. If the Target UE has not received a relay discovery message from a candidate U2U Relay or does not connect to the candidate U2U Relay, the Target UE may perform the U2U Relay discovery procedure with a candidate U2U Relay ID in the discovery message.

Next, in step 5 of Fig. 3, the Target UE sends a response to the Source UE via Relay 1 that includes the new U2U Relay ID. If no new U2U Relay is chosen, the Target UE may not respond to Source UE or send a response indicating Relay reselection failure.

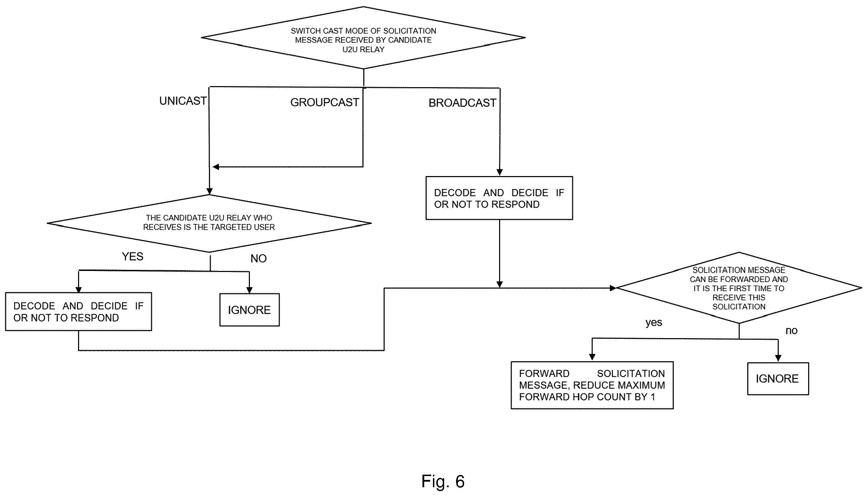

Finally, when a new U2U Relay, i.e. Relay 2, is chosen, a new connection is set up between the Source UE and the Target UE via the new U2U Relay in step 6 of Fig. 6.

However, due to an evolution of radio condition or sidelink failure event (potentially caused by UE mobility or sudden change of radio propagation condition), relay reselection is necessary when the current relay cannot work anymore. In particular, considering an abrupt sidelink failure, which is very likely to happen for high mobility scenarios such as V2X or high-speed train communications, or considering fast varying channels or complicated environments with various blockage effects, the relay reselection proposition in the art, as described above is not realistic because it requires a negotiation between the source and target UE via the current U2U relays.

According to the current propositions in 3GPP, when such abrupt sidelink failure occurs, there is no other choice than redo the relay discovery procedure from scratch. However, reperform the relay selection procedure is not optimal at all. It takes time to complete the relay discovery procedure from scratch and also there will be a service breakdown. The service continuity and QoS continuity cannot be guaranteed with the current solution proposed in 3GPP.

Even if, in the art, the method of negotiation between source and target UE via the current U2U relay can somehow anticipate a potential performance degradation by sidelink radio condition monitoring, and then triggers a negotiation between source and target UE while the current sidelink communication via the U2U relay is still good. However, in certain communication scenarios, such as vehicle-to-everything (V2X) or high-speed train, or scenarios that involve rapid changing radio propagation conditions, for example, deep fading, blockage, moving scattering objects, an abrupt sidelink failure can occur before the source and target UE having negotiated the reselected U2U relay. In such an event, the abovementioned methods in the art cannot solve the problem and according to current propositions in 3GPP, restarting the relay discovery and selection procedure is inevitable. In addition, the relay reselection criteria proposed in the above method are based on sidelink signal quality, which cannot fully reflect the application-level requirements such as QoS.

The invention aims to address these problems in the art to optimize the relay reselection.

### SUMMARY

In this regard, according to one aspect of the invention, it is provided a method for optimizing relay reselection of sidelink communication between a source user equipment and a target user equipment, in particular, in the context of off-network UE to UE communications based on the sidelink PC5 interface, the method comprising:
- sending a solicitation message for a relay reselection by a first U2U relay to at least one U2U relay in the vicinity, wherein the sidelink communication is initially established via the first U2U relay; and
- sending a response message to respond to the solicitation message, by at least one candidate U2U relay among the at least one U2U relay in the vicinity, for relay reselection.

Such an arrangement is different from the state-of-the-art propositions for relay reselection, where it is the source/ target UE that either restarts a relay discovery procedure from scratch or performs a relay reselection negotiation between the source and target UE via the current relay. In the present invention, it is the current relay, i.e. the first U2U relay, that initiates the relay reselection procedure by sending the solicitation message to find a second U2U relay suitable for relay reselection. Therefore, the present invention is more efficient for relay reselection under certain circumstances such as an abrupt sidelink failure event.

Advantageously, the solicitation message comprises layer 2 ID of both source and target user equipments. In addition, the solicitation message includes an indication to which node the response is sent (source, target or relay). In particular, the solicitation message comprises an indication of the reply-to address among the source user equipment, the target user equipment or the first U2U relay, for informing the at least one candidate U2U relay receiving the solicitation information to the source user equipment, the target user equipment or the first U2U relay the response message is sent.

Advantageously, the solicitation message further comprises service contextual information regarding service traffic that goes through the first U2U relay.

Advantageously, the response message comprises layer 2 ID of the at least one candidate U2U relay. In particular, the response message may further comprise service assistance information provided by the candidate U2U reply including the candidate U2U relay's prediction on its performance.

Advantageously, the service contextual information or the service assistance information comprise any one of end-to-end (E2E) QoS, relay's load, QoS sustainability, and application-level information.

According to one embodiment of the present invention, during the step of sending a response message to respond to the solicitation message:
- the response message is sent to the first U2U relay; or
- the response message is sent to the source user equipment or the target user equipment.

According to one embodiment of the present invention, before the step of sending the solicitation message, it comprises
- establishing the connection between the source and target user equipments via the first U2U relay;
and after the step of sending the response message, it comprises:
- determining at least one second U2U relay for relay reselection by virtue of the first U2U relay.

Advantageously, the at least one candidate U2U relay receives the solicitation information and decides to be an applicant for the second U2U relay of the relay reselection.

Advantageously, the method according to the present invention further comprises:
- making a relay reselection decision and selecting the at least one second U2U relay for the relay reselection among the at least one candidate U2U relay based on the service assistance information.

Advantageously, the step of determining at least one second U2U relay for relay reselection comprises:
- determining by the first U2U relay directly or indirectly the at least one second U2U relay suitable for relaying in place or in addition of the first U2U relay.

Therefore, in addition to letting a UE relay determines directly or indirectly the group of UE relays that are suitable for relaying in place or in addition to itself, the present invention proposes the determination process wherein it may include service contextual and service assistance information relative to end-to-end (E2E) QoS, relay's load, QoS sustainability, and application-level information. Therefore, the present invention can guarantee the service continuity and the QoS continuity/sustainability during the relay reselection for communication between two UEs when radio conditions change due to, for example, mobility, blockage, or deep fading.

Furthermore, according to another embodiment of the present invention, during the step of sending a solicitation message for a relay reselection:
- if the first U2U relay knows the layer 2 ID of the at least one candidate U2U relay, the first U2U relay sends the solicitation message in a unicast or group cast manner to the at least one candidate U2U relay;
   otherwise
- the first U2U relay sends the solicitation message in a broadcast manner.

In addition, during the step of making a relay reselection decision, the replay reselection decision is made based on at least one of the following metrics:
- radio link quality;
- service assistance information; and
- implementation-specific preferences.

Moreover, according to yet another embodiment of the present invention, the method according to the present invention further comprises:
- establishing a new connection between the source and target user equipments via the second U2U relay.

According to another aspect of the invention, it is provided a computer program comprising program code to be executed by a processor, the program code being adapted to performance of a method of the present invention as discussed above.

The characteristics and advantages of other aspects of the present invention will be discussed in the following exemplary embodiments. Those skilled in the art can clearly understand the content of the present invention and the technical effects obtained based on these exemplary embodiments.

### BRIEF DESCRIPTION OF THE DRAWINGS

Other features and advantages of the present invention will appear in the description hereinafter, in reference to the appended drawings, where:
Figure 1 illustrates a relay discovery model A in the art.
Figure 2 illustrates a relay discovery model B in the art.
Figure 3 illustrates a negotiation-based relay reselection model in the art.
Figure 4 illustrates a U2U relay reselection embodiment according to the present invention.
Figure 5 is a flow chart showing a decision flow of sending the solicitation message by current U2U relay according to the present invention.
Figure 6 is a flow chart showing a decision flow to treat messages according to the present invention.
Figure 7 illustrates an embodiment of U2U relay reselection as a replacement for 2-hop relaying according to the present invention.
Figure 8 illustrates an embodiment of U2U relay reselection in addition of itself for multi-hop relaying according to the present invention.
Figure 9 illustrates an embodiment of example of U2U relay reselection with high layer information.

### DESCRIPTION OF EMBODIMENTS

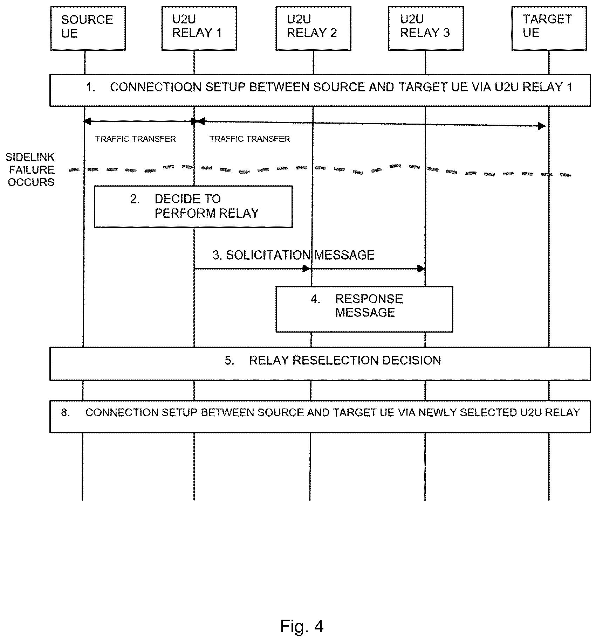

Fig. 4 shows an exemplary embodiment of the relay reselection method according to the present invention, wherein it shows off-network U2U communications based on the sidelink PC5 interface, in which a source user equipment, Source UE, may connect to a target user equipment, Target UE, via any one of U2U relays 1 to 3.

The exemplary method comprises the following steps:
Step 1: Connection between the source and target UE via U2U relay 1 is established by using the relay discovery, selection and link establishment methods in the art, such as the current 3GPP propositions as described above. Once the layer 2 link is established, traffic is transferred via the U2U relay 1, which can be either a L2 or L3 U2U relay.
Step 2: The U2U relay 1 decides to perform U2U Relay reselection. This may be triggered by any one of the following situations:
   a. a sidelink failure event occurs and there is no time for source and target user equipments UEs to negotiate a relay selection before the event happened, the U2U relay 1 observes a link failure in either of the source UE-U2U relay 1 link or the U2U relay 1-target UE link;
   b. the U2U relay 1 monitors the source UE-U2U relay 1 link and/or the U2U relay 1-target UE link, observes an evolution of radio link condition which may lead to either a link failure in the future or the existence of U2U relays with potential better radio link condition for relaying; and
   c. periodically, or periodically when the link quality falls under a given level. In this case, a reselected relay will be kept in a waitlist in case a relay reselection is needed, to be discussed late.
Step 3: The U2U relay 1 sends a solicitation message for the relay reselection to other U2U relay(s) (U2U relay 2 and U2U relay 3 in the figure) in its vicinity, the format of this solicitation message is different from the one in relay discovery model B as discussed above. The solicitation message includes the layer 2 ID of both source and target UEs, and optionally the service contextual information regarding service traffic that previously goes through the U2U relay 1. The service contextual information can be the E2E QoS of the sidelink communication from source to target UE, the application-level information regarding the traffic, the QoS sustainability requirements, etc. A detailed discussion of this solicitation message format will be discussed later.

Moreover, in step 3, many sub-scenarios can happen, of which the embodiments will be discussed later.

Step 4: Among the U2U relay(s) in the vicinity of U2U relay 1, those who have received the solicitation information and consider them to be a candidate U2U relay for the relay reselection, will send a response message to respond to the solicitation message. The format of this response message is different from the one proposed in relay discovery model B as discussed above. The response message includes the layer 2 ID of this U2U relay, and other service assistance information that can be used for relay selection. The service assistance information includes but not limited to this U2U relay's prediction of the source side QoS and target side QoS with respect to the E2E QoS in the solicitation message, this U2U relay's load, QoS sustainability, etc. A detailed discussion of this response message format will be discussed later.

Also in step 4, many sub-scenarios can happen, of which the embodiments will be discussed later.

Step 5: A relay reselection decision is made. This decision can be made by either the source/target UE or the U2U relay 1, depending on how the response message procedure in step 4 is implemented. A more detailed discussion will be provided later.

Step 6: Once the new U2U relay is reselected, a connection between the source and target UE via the new U2U relay will be established. This layer 2 link connection can be initiated by either the source UE or the new U2U relay, a more detailed discussion will be given later.

In one exemplary embodiment, a waiting list can be used, and the reselection procedure as discussed above can be split in two parts among time:
The first part is composed of steps 2-4 in Fig. 4 described above. After this part, a list of candidate U2U relays is obtained and stored in the waiting list at the selection point, which can be the relay UE, the source UE or the target UE. The list can be updated regularly, i.e. this procedure part is executed periodically.
The second part is composed of steps 5 and 6 described above, i.e. relay selection from the waiting list and setup with the new relay. The criteria for candidate selection are the same than when the complete selection procedure is executed in one row.

Optionally, the relay UE can memorise the waiting list even if the selection point is at the source UE or the target UE. In this case, when a relay reselection has to be done (e.g. link quality become too bad), the relay provides a list of candidate U2U relays to the source UE or target UE from its waiting list. For example, the relay builds up from its waiting list responses messages as when they have been received from the candidate U2U relays and provides them to the source UE or target UE on behalf of the candidate U2U relays. Hence, the source UE or the target UE is not impacted by the use of a waiting list.

The advantage of using a waiting list is to improve service continuity. Indeed, in case of a sudden drop of one link quality, the new relay is peaked up from the waiting list without the need to first find candidate U2U relays among the relays in the vicinity.

The relay can decide to build or update the waiting list from different criteria, for example periodically, periodically only when the radio conditions are worsening.

Below, steps 3 to 6 of the embodiment of Fig. 4 will be discussed in more detail.

### - Step 3

In step 3, the first U2U relay, i.e. U2U relay 1, sends the solicitation message for the relay reselection to find a U2U relay (or a group of U2U relays if multi-hop relaying is enabled) as his replacement or a group of U2U relays in addition of itself (if multi-hop relaying is enabled).

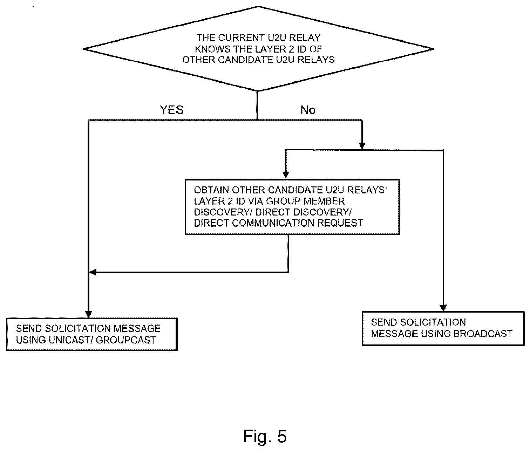

A first aspect of the solicitation message is how can the U2U relay 1 knows the layer 2 ID of the other U2U relays so as to send the solicitation message, which is illustrated in Fig. 5, wherein:
One scenario is that the layer 2 IDs of the potential U2U relays, e.g. U2U relay in the vicinity of U2U relay 1, are already known by the current U2U relay 1. This can happen due to, for example, the following situations:
(1) there exist previous sidelink direct communication/direct discovery/group member discovery (c.f. LTE ProSe TS23.303) between U2U relay 1 and the potential U2U relays,
(2) there exist previous relay discovery procedure (either model A or B or else as described in Section 3.1), and the current U2U relay already discovered other potential U2U relay,
(3) the layer 2 IDs of other potential U2U relays are provided to current U2U relay by the application-level server, for example, considering all the U2U relays are infrastructure nodes to provide sidelink relay capability for a vehicle/train private network, an application-level server can directly provide each U2U relay the layer 2 ID of each other using application-level signalling. In such a case, the current U2U relay can send the solicitation message in a unicast or groupcast manner to the targeted candidate U2U relay(s).

Another scenario is that the layer 2 IDs of the potential U2U relays are not known by the current U2U relay. In this case, there will be two possibilities for the current U2U relay. Possibility 1, the current U2U relay launches a group member discovery/direct discovery/direct communication request procedure to discover the candidate U2U relays in its vicinity and obtain their layer 2 ID. Possibility 2, the solicitation message is broadcasted by the current U2U relay.

A second aspect of the solicitation message is its format. In contrast to the solicitation message in relay discovery model B as discussed above, the solicitation message includes the following parameters:
- Type = Solicitation
- Disco Type = U2U Relay reselection
- Discoverer Info (i.e. an upper layer identifier for the current U2U relay)
- ProSe UE ID of the current U2U relay (i.e. layer-2 ID of the current U2U relay)
- ProSe UE ID of the source UE (i.e. layer-2 ID of the source UE)
- ProSe UE ID of the target UE (i.e. layer-2 ID of the target UE)
- (optional) A list of " service contextual information" parameters
- (optional) Solicitation message forward enabled (or not), constraints regarding the solicitation message forward
- Response message recipient indicator (possible recipient is either source UE, or target UE, or current U2U relay, or intermediate U2U relay if multi-hop routing is allowed )
- A list of "Target User Info" parameters

In this case, preferably, in the solicitation message, the current U2U relay 1 will provide the recipient(s) the layer 2 ID of source UE/ target UE/ itself and the service contextual information such as the E2E QoS of the sidelink communication from source to target UE, the application-level information regarding the traffic, the QoS sustainability requirements, etc. Optionally, the current U2U relay 1 can also indicate if the recipient of the solicitation message can or cannot forward this message to other candidate U2U relays in the vicinity of the recipient, and also if the forward of solicitation is enabled, additional constraints on the solicitation message forwarding (e.g., maximum hops to forward, etc.).

### - Step 4

In step 4, the U2U relays that have received the solicitation information and consider them to be an applicant for the relay reselection will send a response message.

A first aspect of the response message is what the other U2U relays will do upon receiving the solicitation message, which is illustrated in Fig. 6 and is linked to the scenarios of the solicitation message described in Fig. 5.

As shown in Fig. 6, if the solicitation message is unicasted/groupcasted, which means that the Layer 2 ID(s) of the recipient is indicated, the U2U relay(s) with layer 2 ID(s) that corresponds to the recipient(s) will receive the solicitation message and pass to the next step (step 5) to see if it (they) can be (a) candidate U2U relay(s) for the relay reselection. If a U2U relay is not the addressed recipient of this unicasted/groupcasted solicitation message, it will simply drop it.

Also as shown in Fig. 6, if the solicitation message is a broadcast, the situation is more complicated. U2U relays that receive the solicitation message broadcast will first decode this message and pass to the next step (step 5) to see if they can be candidate U2U relays for the relay reselection.

In addition, after decoding and decide if the candidate U2U relay should response, it will also check the solicitation message forwarding part to see if they are authorized to forward this solicitation message in a broadcast manner in their vicinities. If the answer is yes, they will also check the solicitation forward constraints and update this field accordingly when they forward this solicitation message. For example, if a maximum forward hop number exists in the solicitation forward constraint, the U2U relay will decrease the value by one when he forwards the solicitation message. Also, in order to reduce the duplication of forwarding, every U2U relay will only perform once the solicitation message broadcast forwarding for a solicitation message with the same triple set of source UE/ target UE/ current U2U relay layer 2 ID.

A second aspect of the response message is how each U2U relay receiving the solicitation message can decide if it can be an applicant for the relay reselection.

If this solicitation message is a unicast/groupcast message that is dedicated to the received U2U relay, or the solicitation message is a groupcast message, the U2U relay can decode the solicitation message and obtain the source UE, target UE, and the current U2U relay 1's layer 2 IDs. With the layer 2 ID of the source and target UE, the U2U relay can use the direct discovery procedure/direct communication request (c.f. LTE ProSe TS23.303) to verify if it is able to have a direct communication link with them. In addition, if direct communication is possible, with the service contextual information received in the solicitation message, the U2U relay can also predict and generate the service assistance information regarding the potential direct communication link. The service assistance information can be used for the relay selection. For example, suppose the E2E QoS for the service traffic is included in the solicitation message. In that case, the U2U relay can predict the source side QoS and target side QoS based on the feedback of the direct discovery procedure/direct communication request for the direct communication link quality (signal strength as an example) and a preconfigured look-up-table of the QoS profile for the QoS split.

In the case of the candidate U2U relays perform the relay discovery in model A as discussed above, which indicates that each candidate U2U relay will broadcast an announcement message periodically to let other UEs in its vicinity know it can be a U2U relay, such a procedure can also improve the relaying reselection.

In this case, the source and target UE layer 2 IDs are not essential for the candidate U2U relay since the source and target UE can obtain its layer 2 ID during the model A announcement and establish a layer 2 link with the candidate U2U relay.

However, service contextual information and service assistance information are still useful for the optimization of relay selection. When the current U2U relay sends a solicitation message with service contextual information, upon receiving such information, the candidate U2U relays in model A can add the service assistance information in its broadcast announcement as a personal performance prediction given the flow/application requirements specified in service contextual information. In this way, when the source UE received an enriched version of the announcement message during neighborhood sensing, a better reselection choice can be made.

A third aspect of the response message is to whom should the U2U relay send the response message. The candidate U2U relay may obtain the information on the recipient of the response message from the response message recipient indicator field in the solicitation message. The response message recipient indicator field specifies the reply-to address to which the response message should be sent. Different exemplary implementations are listed below:
- The response message is sent to the original U2U relay (U2U relay 1, the one who is originally sending the solicitation message). In this case, the original U2U relay may receive multiple response messages from different candidate U2U relays.
- The response message is sent to the source/target UE. In this case, the source/target UE may receive multiple response messages from different candidate U2U relays.
- If the solicitation message is a broadcast solicitation forwarded by an intermediate U2U relay, the candidate U2U relay will send the response message to the intermediate U2U relay and the response message will go backward until it reaches the U2U relay who originally sends the solicitation broadcast.

A fourth aspect of the response message is its format. Response message format. In contrast to the response message in relay discovery model B as discussed above, the response message includes the following parameters:
- Type = Response
- Disco Type = U2U relay reselection
- Discoverer Info (i.e. an upper layer identifier for the candidate U2U relay)
- ProSe UE ID of candidate U2U relay (i.e. layer-2 identifier of candidate U2U relay)
- A list of "Target User Info" parameters
- (optional) A list of " service assistance information" parameters

In the response message, the candidate U2U relay can provide service assistance information such as its QoS split anticipation with respect to the E2E QoS (i.e., source side QoS and target side QoS), the candidate U2U relay's load, QoS sustainability, etc. This service assistance information can be used for relay reselection.

### - Step 5

In Step 5, depending on to whom the response message is sent, the relay reselection decision can be made by the source UE, the target UE or the original U2U relay. The recipient entity of the response message may receive multiple messages from different candidate U2U relays, it can make a final decision based on (1) radio link quality (such as signal strength), (2) service assistance information described before, (3) implementation-specific preferences (such as prefer a routing with fewer hops if multi-hop is considered, or a preference of U2U relays in certain geo-location region, etc.), or (4) a combination of such metrics.

### - Step 6

In Step 6, depending on to whom the response message is sent, and who is making the final decision on the relay reselection, the layer 2 link establishment procedure can be initiated by different entities.

If the original U2U relay decides the relay reselection, it will indicate this decision to the reselected U2U relay and this U2U relay will initiate a direct communication request to establish a layer 2 link with both the source and target UE. If it is the source/ target UE who makes the final decision on the relay reselection, it will be the source/target UE to initiate the direct communication request. In this case, if the reselected U2U relay is a L2 relay, the direct communication request from the source (target) UE to the target (source) UE and is relayed by the reselected U2U relay. If the reselected U2U relay is a L3 relay, the direct communication request will be from the source (target) UE to the reselected U2U relay, and the reselected U2U relay will initiate a second direct communication request from itself to the target (source) UE.

Moreover, in the context of the present invention, the original first U2U relay 1 can determine directly or indirectly a group candidate U2U relays suitable for relaying in place or in addition of itself.

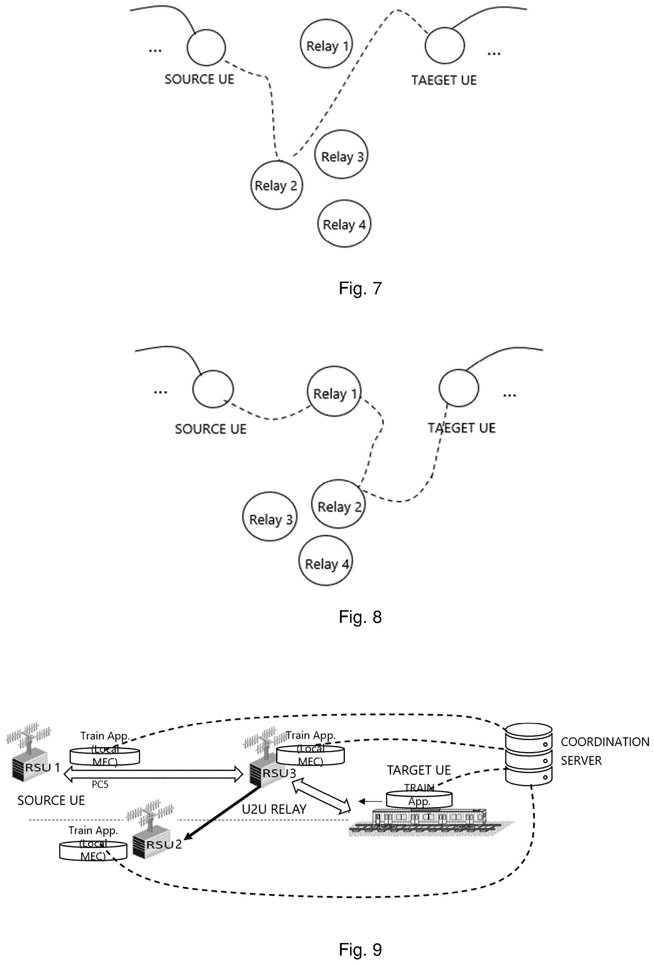

In the case of relaying in place of current U2U relay, only 2-hop U2U relay (source UE-U2U relay-target UE) is considered. As shown in Fig. 7, after relay reselection, the first U2U relay 1 which connects with the source and target UEs is replaced by U2U replay 2.

In the case of relaying in place of current U2U relay finding optimized relaying in addition of itself, this is multi-hop U2U relay, which is illustrated in Fig. 8.

In an exemplary embodiment in Fig. 8, it is the current U2U relay 1 who will initiate the solicitation message to find a group of candidate U2U relays (relays 2 to 4) in addition to itself. For example, in Fig.8, after reselection, the source UE is connected to the target UE via both U2U relays 1 and 2. The differences from the first case of relay selection as a replacement is in the service contextual information and service assistance information.

Considering for example (without loss of generality) QoS information as the service contextual/ assistance information, considering a scenario as is depicted in Fig. 8, current relay node will send a solicitation message to find additional U2U relay, the service contextual information that is included in the solicitation message is not the E2E QoS requirements as in the case to find a replacement U2U relay. In this scenario, the service contextual information is the target UE side QoS that current U2U relay has negotiated with the target UE during sidelink communication before the relay reselection. Upon receiving the solicitation message, each candidate U2U relay can anticipate its performance by providing a QoS split for its relay node side QoS over the link to the current U2U relay and its target UE side QoS over the link to the target UE. This split is based on the input of the target UE side QoS received in the solicitation message. After making the QoS split and including it in the service assistance information for the response message, each U2U candidate will have to send the response message to the current U2U relay that initializes the solicitation. The current U2U relay node, upon receiving multiple copies of the response messages from multiple candidate U2U relays, can select the optimal addition node based on the service assistance information.

Optionally, in the case of multiple additional hop U2U relays (e.g., U2U relay 2 in Fig. 8 will relay as an additional U2U relay, and this additional U2U relay 2 will relay to the target UE), the previously described procedure is performed in a chaining manner (the newly selected addition U2U relay 2 will repeat what relay node has performed to find its additional successor U2U relay node).

Next, service contextual information and service assistance information will be discussed in detail. In particular, several exemplary embodiments on how the service contextual information provided from the current U2U relay and service assistance information provided by candidate U2U relay can be used to optimize the relay reselection will be discussed.

A first embodiment relates U2U relay reselection with QoS anticipation. In this embodiment, the current U2U relay initiates a solicitation message as described in step 3 of the present inventio. The service contextual information included in the solicitation message is the E2E QoS for the current serving sidelink flow. More precisely, the original PQI (PC5 QoS Identifier) and associated QoS profile and parameters are the service contextual information. QoS profile and parameters are, for example, resource type, priority, packet delay budget (PDB), packet error rate (PER), and guaranteed flow bit rate (GFBR), which are the parameters indicating the application flow characteristics/ constraints. They are sent from source UE to the current U2U relay during the layer 2 link establishment/modification between these two nodes, therefore this information is available at the current U2U relay when sending a solicitation message.

For example, in one particular embodiment, the current U2U relay will send a solicitation message with included service contextual information as follows:
PQI: 23, GFBR: 1Mbps

One candidate U2U relay, for example relay 2, can decode the solicitation message to obtain the layer 2 ID of the source UE, the target UE and the service contextual information above. Relay 2 can send a DCR to the source/target UE using the layer 2 ID so as to verify if it is able to establish a layer 2 link with the source UE and target UE. Upon receiving the DCR, the source UE and target UE can respond with a 'direct communication accepted' to confirm a sidelink between relay 2 and the source/target UE is available, the relay 2, upon receiving the 'direct communication accepted', can use the received signal level of the acknowledgment to roughly estimate the sidelink quality. In addition, relay 2 will be (1) either pre-configured or (2) configured by the cellular base station when it is in coverage of the base station a look-up table for the supported QoS profile for the related Source side PC5 QoS parameters and related target side PC5 QoS parameters.

Assuming the pre-configured look-up table for the supported QoS profile for the related source side PC5 QoS parameters at relay 2 is the following:

| PQI | resource type | | priority | | PDB | PER |
|---|---|---|---|---|---|---|
| ... | | ... | | ... | ... | ... |
| 21 | | GBR | | 3 | 20ms | 10^-4 |
| 22 | | GBR | | 4 | 50ms | 10^-2 |
| 26 | | GBR | | 3 | 50ms | 10^-4 |
| 28 | | GBR | | 3 | 70ms | 10^-4 |
| ... | | ... | | ... | ... | ... |

According to the service contextual information of the E2E QoS :
PQI: 23, GFBR: 1Mbps

The source side PC5 QoS which can potentially fulfill the above E2E QoS is the line of PQI = 21, 26, 28. Because the line PQI=22 has a PER too high.

Assuming relay 2 will have a similar table for the target side PC5 QoS, and it will perform the same method to estimate the sidelink capacity for the sidelink between relay 2 and the target UE. For illustration purposes, assuming that the retained target side PC5 QoS are: PQI= 21, 26, 28.

Since the E2E QoS has a delay budget of 100ms, the sum of the source and target side PC5 QoS must respect this delay constraint, therefore the combination of the source side PQI = 26 and target side PQI= 28 cannot be used.

Assuming the receive signal level for the 'direct communication accepted' message from the source UE is SINR_s (does not preclude other possible physical layer measurements such as RSRP, RSRQ, etc.), relay 2 can roughly estimate the sidelink capacity for the sidelink at source UE side as C_s=log(1+SINR_t). The GFBR for the source/target side PC5 QoS parameter can be roughly estimated as C_s*BW (C_t*BW for the target side, BW is the system bandwidth).

Finally, in the response message of relay 2, it will include the service assistance information for the supported source side and target side PC5 QoS pairs (supported PQI, estimated GFBR): (Source side: PQI= 21, GFBR=xx1,Target side: PQI =21, GFBR=yy1), (Source side: PQI= 21, GFBR=xx1, Target side: PQI =26, GFBR=yy1), (Source side: PQI= 21, GFBR=xx1, Target side: PQI =28, GFBR=yy1), (Source side: PQI= 26, GFBR=xx1, Target side: PQI =21, GFBR=yy1), (Source side: PQI= 26, GFBR=xx1,Target side: PQI =26, GFBR=yy1).

Suppose another candidate U2U relay 3 will perform the same procedure as relay 2 and send a response message to the source UE with its service assistance information for the supported source side and target side PC5 QoS pairs. Upon receiving multiple response messages from different candidate U2U relays, the source UE can make a final decision on the relay selection based on the service assistance information. The decision criteria can be totally implementation-specific, for example, taking into account the congestion control parameters at the source UE, and selecting a U2U relay that can provide a just-fitting pair of the source side and target side PC5 QoS split, for example, select relay 2 with pair (Source side: PQI= 26, GFBR=xx1, Target side: PQI =26, GFBR=yy1). Or the source UE can take some margins for the delay if the application is really delay critical, for example, the source UE can select relay 2 with the pair (Source side: PQI= 21, GFBR=xx2, Target side: PQI =21, GFBR=yy2), which will have an estimated E2E PDB of 40ms compared to the E2E QoS demand of 100ms as delay requirements. Alternatively, the source UE can prefer a combination with better GFBRs once the delay and PER constraints are satisfied.

Once the relay reselection is decided, the layer 2 link establishment procedure between the source UE and the reselected relaying and between the relaying and the target UE can be established and the corresponding QoS can be agreed.

Another embodiment relates to U2U relay reselection with QoS sustainability. In this embodiment, QoS sustainability is a parameter defining the confidence to provide a given QoS level among time. For example, the QoS sustainability can be (low, medium, high) it can be calculated according to, e.g., node mobility, load prediction, battery level (power consumption).

For example, in one particular embodiment, the current U2U relay will send a solicitation message with included service contextual information as follows:
PQI: 23, GFBR: 1Mbps

For a candidate U2U relay, it can reply with a response message including the following service assistance information:
(Source side: PQI= 26, GFBR=x1, QoS sustainability: medium, Target side: PQI =26, GFBR=y1, QoS sustainability: high)

Another candidate U2U relay can reply with the following service assistance information:
(Source side: PQI= 21, GFBR=x1, QoS sustainability: low, Target side: PQI =21, GFBR=y1, QoS sustainability: low)

In this case, to have a better QoS sustainability, the source UE may choose the first U2U relay candidate.

Yet another embodiment relates to U2U relay reselection with high layer information. In this embodiment, assume that the U2U relays are road side units (RSUs) deployed along the railways for a non-public railway communication network as illustrated in Fig. 9.

In this embodiment, all the U2U relays (RSUs) are fixed deployments with positions known ahead of time. Assume that all the U2U relays are subscribed to a service group for the purpose of performing U2U ProSe relaying and their layer 2 ID are disseminated among all the members in the group ahead of time. This is to say, each RSU know exactly the layer 2 ID of other RSUs in its vicinity, and also knows how to reach a RSU far away via multi-hop routing.

In this embodiment, the current U2U relay RSU3 initiates a solicitation message as described in step 3. The current U2U relay RSU3 can predict the next relay to serve the target UE by high layer information such as the current position of the target UE and the speed information of the target UE and the position of the candidate U2U relay (RSU2). The service contextual information included in the solicitation message can be the current position of the target UE train (if the current U2U relay RSU is able to predict or obtain such information), or a kind of prediction information on the time of the target UE that will be in the vicinity of the RSU2. The service contextual information can also include the last data packets that the is relayed from RSU3 to the target UE, in this case when the RSU2 is reselected to take the place of RSU3, it can start the traffic relaying exactly with the data that has not been successfully transmitted by RSU3 due to a sidelink switching.

In the service assistance information that is sent from the candidate RSU2 to the source UE (RSU1), an estimation of the serving time of RSU2 as a U2U relay can be included. In this way, upon receiving this information the source UE (RSU1) can optimize its buffer and caching mechanism for the relaying.

In view of above, in this invention, it is proposed a method to optimize the relay reselection for communication between two UEs in the context of off-network UE to UE communications via the sidelink PC5 interface. After the connection between source and target UE is set up via the a first U2U relay, the current first U2U relay is aware of the E2E QoS requirement of the current service flow because it is this U2U relay who is in charge of the E2E QoS split into the source and target side QoS. In the case of a sudden sidelink failure event, there is no abundant time for source and target UE to negotiate the relay reselection, instead of letting the source UE perform again the relay discovery and selection procedure, in the present invention, it is the current U2U relay determining directly or indirectly the group U2U relays suitable for relaying in place or in addition of itself. In this way, there is no negotiation needed between the source and target UEs, which is an advantage over the source-target UE negotiation-based relay reselection method during sudden link failure, In addition, since the first U2U relay is the one who relays the communication, it has first-hand information regarding the application flow between the source and target UE. Therefore, when letting the first U2U relay to determine directly or indirectly a group U2U relays suitable for relaying in place or in addition of itself, such kind of flow/application service contextual information can be taken into account for better decision. Moreover, as discussed above, the determination process may include service assistance information provided by candidate U2U relays which is each candidate UE's prediction on its performance if it is selected based on the service contextual information on the flow/application requirements.

Moreover, it is known to those skilled in the art, the aforementioned examples described above, according to the present invention, can be implemented in many ways, such as program instructions for execution by a processor, as software modules, microcode, as computer program product on computer readable media, as logic circuits, as application specific integrated circuits, as firmware, etc. The embodiments of the invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the embodiments of the invention can take the form of a computer program product accessible from a computer-usable or computer-readable medium providing program code for use by or in connection with a computer, processing device, or any instruction execution system. For the purposes of this description, a computer-usable or computer readable medium can be any apparatus that can contain, store, communicate, or transport the program for use by or in connection with the instruction execution system, apparatus, or device. The medium can be electronic, magnetic, optical, or a semiconductor system (or apparatus or device). Examples of a computer-readable medium include, but are not limited to, a semiconductor or solid state memory, magnetic tape, a removable computer diskette, a RAM, a read-only memory (ROM), a rigid magnetic disk, an optical disk, etc. Current examples of optical disks include compact disk-read-only memory (CD-ROM), compact disk-read/write (CD-R/W) and DVD.

The embodiments described hereinabove are illustrations of this invention. Various modifications can be made to them without leaving the scope of the invention which stems from the annexed claims.

## Claims

1. A method for optimizing relay reselection of sidelink communication between a source user equipment and a target user equipment, the method comprising:
- sending a solicitation message for a relay reselection by a first U2U relay to at least one U2U relay in the vicinity, wherein the sidelink communication is initially established via the first U2U relay; and
- sending a response message to respond to the solicitation message, by at least one candidate U2U relay among the at least one U2U relay in the vicinity, for relay reselection.

2. The method according to claim 1, wherein the solicitation message comprises layer 2 ID of both source and target user equipments.

3. The method according to claim 1 or 2, wherein the solicitation message comprises an indication of the reply-to address among the source user equipment, the target user equipment or the first U2U relay, for informing the at least one candidate U2U relay receiving the solicitation information to the source user equipment, the target user equipment or the first U2U relay the response message is sent.

4. The method according to claim 1, wherein the solicitation message comprises service contextual information regarding service traffic that goes through the first U2U relay.

5. The method according to claim 4, wherein sending a response message to respond to the solicitation message is based on the service contextual information.

6. The method according to claim 1, wherein the response message comprises layer 2 ID of the at least one candidate U2U relay.

7. The method according to claim 1, wherein the response message comprises service assistance information provided by the candidate U2U relay including the candidate U2U relay's prediction on its performance.

8. The method according to claims 4 or 7, wherein the service contextual information or the service assistance information comprise end-to-end (E2E) QoS, relay's load, QoS sustainability, or application-level information.

9. The method according to claim 1, wherein during the step of sending a response message to respond to the solicitation message:
- the response message is sent to the first U2U relay; or
- the response message is sent to the source user equipment or the target user equipment.

10. The method according to claim 1, wherein before the step of sending the solicitation message, it comprises:
- establishing the connection between the source and target user equipments via the first U2U relay;
and wherein after the step of sending the response message, it comprises:
- determining at least one second U2U relay for relay reselection by virtue of the first U2U relay.

11. The method according to claim 10, wherein the at least one candidate U2U relay receives the solicitation information and decides to be an applicant for the second U2U relay of the relay reselection.

12. The method according to claim 7 or 10, wherein it further comprises:
- making a relay reselection decision and selecting the at least one second U2U relay for the relay reselection among the at least one candidate U2U relay based on the service assistance information.

13. The method according to claim 10, wherein the step of determining at least one second U2U relay for relay reselection comprises:
- determining by the first U2U relay directly or indirectly the at least one second U2U relay suitable for relaying in place or in addition of the first U2U relay.

14. The method according to claim 10, wherein the step of determining at least one second U2U relay for relay reselection comprises:
- deciding to perform U2U relay reselection by the first U2U relay periodically or when a sidelink failure event or the evolution of radio link condition is detected.

15. A computer program comprising program code to be executed by a processor, the program code being adapted to performance of a method as claimed in any one of the preceding claims 1 to 14 when executed by the processor.
